# EUROPEAN PATENT APPLICATION

(11) **EP 4 656 487 A1**
(43) Date of publication of application: **03.12.2025**
(21) Application number: 24179291.0
(22) Date of filing: 31.05.2024
(51) Int. Cl.: B60W 60/00

(54) **DYNAMIC ADAPTATION OF AN OPERATIONAL DESIGN DOMAIN FOR AN AUTOMATED DRIVING SYSTEM OF A VEHICLE**

(71) Applicant: Zenseact AB, 417 56 Gothenburg (SE)
(72) Inventor: NOURI, Ali, 417 53 Göteborg (SE); SIVENCRONA, Håkan, 444 92 Jörlanda (SE)
(74) Representative: Zacco Sweden AB

(57) **Abstract**

A computer-implemented method for dynamically adapting an Operational Design Domain, ODD, for an Automated Driving System, ADS, of a vehicle and related aspects are disclosed. The method comprises obtaining a driving task to be executed by the ADS, decomposing the obtained driving task into a plurality of driving sub-tasks, and executing a risk calculation for each driving sub-task to evaluate whether the ADS is capable of executing each driving sub-task in view of an acceptable risk value for each driving sub-task based on a capability of the ADS and information about an environmental context surrounding each driving sub-task. The method further comprises defining an ODD for the ADS for the obtained driving task based on the executed risk calculation so to control an availability of the ADS for execution of each driving sub-task of the plurality of driving sub-tasks, controlling the ADS of the vehicle in accordance with the defined ODD for execution of the obtained driving task, and continuously repeating the risk calculation for any remaining driving sub-tasks not yet executed.

## Description

### TECHNICAL FIELD

Embodiments herein relate to for dynamically adapting an Operational Design Domain (ODD) for an Automated Driving System (ADS) of a vehicle. In particular, but not exclusively, embodiments herein relate to methods and other related aspects for dynamically defining an ODD for an ADS of a vehicle and controlling an autonomous execution of a driving task using the ADS based on the dynamically defined ODD.

### BACKGROUND

During the last decade, the development of autonomous vehicles has exploded and many different solutions are being explored. An increasing number of modern vehicles have advanced driver-assistance systems (ADAS) to increase vehicle safety and more generally road safety. ADAS - which for instance may be represented by adaptive cruise control (ACC), collision avoidance system, forward collision warning, etc. - are electronic systems that may aid a vehicle driver while driving. Today, development is ongoing in both ADAS as well as Autonomous Driving (AD), within a number of different technical areas within these fields. ADAS and AD will herein be referred to under the common term Automated Driving System (ADS) corresponding to all of the different levels of automation as for example defined by the SAE J3016 levels (0 - 5) of driving automation.

Accordingly, in a not too distant future, ADS solutions will to a greater extent find their way into modern vehicles. An ADS may be construed as a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all or at least some responsibilities to the system. An ADS commonly combines a variety of sensors to perceive the vehicle's surroundings, such as e.g. radar, LIDAR, sonar, camera, navigation system e.g. GPS, odometer and/or inertial measurement units (IMUs), upon which advanced control systems may interpret sensory information to identify appropriate navigation paths, as well as obstacles and/or relevant signage.

A critical component in the deployment of ADS is the concept of the Operational Design Domain (ODD). The ODD defines the specific conditions under which an automated driving system is designed to function, including aspects such as geographic area, roadway types, environmental conditions, and other operational constraints.

Traditional ODDs are typically static, predefined during the design and testing phases of the ADS. This static nature imposes significant limitations on the flexibility and adaptability of the ADS, potentially reducing its effectiveness in real-world, dynamic environments. For instance, unforeseen changes in weather, road conditions, or traffic patterns can lead to situations where the ADS may struggle to perform optimally or need to transition control back to the human driver abruptly. Analogously, the static nature of traditional ODDs may also result in an unnecessary restrictive approach to ADS availability leading to low availability of the autonomous functionality of the ADS.

### SUMMARY

The herein disclosed technology seeks to mitigate, alleviate or eliminate one or more of the above-identified deficiencies and disadvantages in the prior art to address various problems relating to limitations in the conventional solutions for defining an ODD for a Automated Driving Systems.

Various aspects and embodiments of the disclosed technology are defined below and in the accompanying independent and dependent claims.

A first aspect of the disclosed technology comprises a computer-implemented method for dynamically adapting an Operational Design Domain (ODD) for an Automated Driving System (ADS) of a vehicle. The method is executable in run-time. The method comprises obtaining a driving task to be executed by the ADS, decomposing the obtained driving task into a plurality of driving sub-tasks, and executing a risk calculation for each driving sub-task to evaluate whether the ADS is capable of executing each driving sub-task in view of an acceptable risk value for each driving sub-task based on a capability of the ADS and information about an environmental context surrounding each driving sub-task. The method further comprises defining an ODD for the ADS for the obtained driving task based on the executed risk calculation so to control an availability of the ADS for execution of each driving sub-task of the plurality of driving sub-tasks, controlling the ADS of the vehicle in accordance with the defined ODD for execution of the obtained driving task, and continuously repeating the risk calculation for any remaining driving sub-tasks not yet executed.

A second aspect of the disclosed technology comprises a computer program product comprising instructions which, when the program is executed by a computing device (e.g., of a vehicle), causes the computing device to carry out the method according to any one of the embodiments disclosed herein. With this aspect of the disclosed technology, similar advantages and preferred features are present as in the previously discussed aspects.

A third aspect of the disclosed technology comprises a (non-transitory) computer-readable storage medium comprising instructions which, when executed by a computing device (e.g., of a vehicle), causes the computing device to carry out the method according to any one of the embodiments disclosed herein. With this aspect of the disclosed technology, similar advantages and preferred features are present as in the previously discussed aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises an apparatus for dynamically adapting an Operational Design Domain (ODD) for an Automated Driving System (ADS) of a vehicle, where the apparatus comprises at least one processor and at least one memory including program code. The at least one memory and program code stored therein are configured to, with the at least one processor, cause the apparatus to, during run-time, obtain a driving task to be executed by the ADS and decompose the obtained driving task into a plurality of driving sub-tasks. Moreover, the at least one memory and the program code are further configured to, with the processor, cause the apparatus to, during run-time, execute a risk calculation for each driving sub-task to evaluate whether the ADS is capable of executing each driving sub-task in view of an acceptable risk value for each driving sub-task based on a capability of the ADS and information about an environmental context surrounding each driving sub-task. Further, the at least one memory and the program code are configured to, with the processor, cause the apparatus to, during run-time, define an ODD for the ADS for the obtained driving task based on the executed risk calculation so to control an availability of the ADS for execution of each driving sub-task of the plurality of driving sub-tasks, and control the ADS of the vehicle in accordance with the defined ODD for execution of the obtained driving task.

Moreover, the at least one memory and the program code are configured to, with the processor, cause the apparatus to, during run-time, continuously repeat the risk calculation for any remaining driving sub-tasks not yet executed. With this aspect of the disclosed technology, similar advantages and preferred features are present as in the previously discussed aspects.

A fifth aspect of the disclosed technology comprises a vehicle comprising an apparatus for dynamically adapting an Operational Design Domain (ODD) for an Automated Driving System (ADS) of the vehicle in accordance with any one of the embodiments disclosed herein. With this aspect of the disclosed technology, similar advantages and preferred features are present as in the previously discussed aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that static limitations for ADS activation/utilizations can be omitted and that the availability of the ADS instead is dynamically and adaptively controlled in run-time rendering a higher overall availability of the ADS and a generally improved road safety.

An advantage of some embodiments is that the ADS may be designed to function as broadly as possible without sacrificing road safety as the expansion of the ODD is automatically and dynamically controlled using a risk management scheme - thereby omitting the need for tedious and time-consuming manual updating processes of the ODD done offline.

An advantage of some embodiments is that user satisfaction may be improved as the general availability of the ADS is improved. By having an automated solution for dynamic and continuous risk calculation for the ADS the driving strategy or policy can be adapted by the software itself (automated solution) rather than having a risk calculation performed during design-time and the ODD statically defined as a result thereof and hardcoded into the ADS. In other words, the system itself can assess, in run-time, whether or not it can execute a specific task rather than having the system's capability defined and limited during design-time. Moreover, if the system's functionality is updated, there is no need to make another risk assessment during design-time and then perform a manual update of the static ODD.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for dynamically adapting an Operational Design Domain (ODD) for an Automated Driving System (ADS) of a vehicle, in accordance with some embodiments.
Figs. 2a-2b is a schematic flowchart representation of a method for executing a hierarchical multi-level risk calculation in accordance with some embodiments.
Fig. 3 is a schematic illustration of a vehicle comprising an apparatus for dynamically adapting an Operational Design Domain (ODD) for an Automated Driving System (ADS) of a vehicle, in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

To address the challenges related to providing an increased availability of autonomous driving while not compromising safety requirements, it is herein proposed to utilize a computationally efficient risk estimation process that reliably and efficiently allows for dynamic adaptation of the ODD, in run-time (i.e., while the vehicle is operating on the road). By enabling a dynamic adjustment of the ADS's ODD in response to real-time data and situational changes, the ADS can maintain optimal performance while still fulfilling safety requirements across a broader range of conditions. This dynamic adaptation involves the integration of advanced sensing technologies, real-time data processing, and communication systems to continuously monitor and interpret the operational environment.

A dynamic ODD adaptation system enhances the resilience and robustness of ADSs by allowing them to autonomously extend or restrict their operational capabilities based on current conditions. For example, during adverse weather conditions, the system can dynamically alter the ODD to reduce the vehicle's speed, change the driving route, hand-over to the driver, or even initiate a safe stop if necessary.

Conversely, in favourable conditions, the system can expand the ODD to take advantage of improved visibility and road conditions, optimizing the travel experience. The development of such a dynamic adaptation system for the ODD of an ADS represents a significant advancement in the field of autonomous driving. It not only enhances the safety and reliability of these systems but also paves the way for more widespread and practical deployment of autonomous vehicles in diverse and variable real-world environments.

In more detail, it is herein proposed to provide a software module in the ADS, or in the vehicle in general, that collects relevant information such as the capabilities of the ADS and components thereof (e.g., perception capability, actuator capability, etc.), road information, weather, driver status, etc. Then based on these inputs, the module will dynamically assess the driving task to be executed (e.g., travel from point A to point B at a specific time and day) by first splitting this the entire task into smaller sub-tasks, and then accepting or rejecting each sub-task depending on whether a calculated risk value for a sub-task is at an acceptable level or not. The ODD for the ADS may then be defined based on the accepted and rejected sub-tasks, where the accepted sub-tasks (tolerable risk) are deemed to be within the ODD while the rejected sub-tasks (not tolerable risk) are deemed to be outside of the ODD. The process (risk calculation and ODD definition) is then continuously repeated as the vehicle executes each sub-task. Thereby, environmental changes (e.g., sudden adverse weather conditions, traffic incidents, etc.) and ADS capability changes (e.g., software bugs, sensor malfunctions, etc.) affecting the risk calculation for each sub-task can be accounted for as the vehicle continues along the entire driving task. Accordingly, some embodiments herein propose a process for run-time determination of the ODD for an ADS in a dynamic and adaptable manner, leading to a more capable ADS with improved usability.

Moreover, the herein proposed methods, apparatuses, and other aspects enable a dynamic ODD determination in a computationally feasible manner, so that it can be executed in run-time. In particular, the decomposing of the driving task into smaller sub-tasks makes the risk calculation reduces the need for computational resources as the number of independent variables in each calculation is reduced, making it more computationally efficient. In contrast. If one were to perform a risk calculation on an entire driving task, which can include varying environmental scenarios (driving on different roads, in different environments) and in extension an immense number of parameters and uncertainties that have to be considered simultaneously.

Still further, the decomposition or splitting of the driving task into smaller sub-tasks provides an increased "up-time" for the driver to utilize the ADS to autonomously control the vehicle as it inherently catches that some parts of the entire driving task may be within the ODD of the ADS and therefore can allow autonomous operation at least within those parts of the entire driving task. In contrast, a system where the entire driving task is assessed as a single driving task is more binary or static and consequently results in the whole driving task being deemed to be outside of the ODD, even in situations where only a minor portion of the driving task actually was outside of the ODD. Thus, some embodiments herein allow for a higher rate of availability for autonomous control, thereby improving user satisfaction. Moreover, some embodiments herein allow for modifications of the sub-task in an attempt to find alternatives should a sub-task be rejected - which further improves the availability of the ADS.

### Definitions

As used herein, the term "if" may be construed to mean "when or "upon" or "in response to" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context. Accordingly, the phrase "if X equals Y" may be construed as "when X equals Y", "when it is determined that X equals Y", "in response to X being equal to Y", or "in response to detecting/determining that X equals Y" depending on the context.

In the present context, an Automated Driving System (ADS) refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that distinction between ADAS and AD lies in the level of autonomy and control. ADAS systems are designed to aid and support drivers, while an ADS aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

The term "Operational Design Domain" (ODD) may be understood as the specific operating conditions and environments in which an ADS or autonomous vehicle is intended to function safely and effectively. It defines the boundaries within which the autonomous system is designed and validated to operate. The ODD conditions may be divided into external ODD conditions and internal ODD conditions. Here, the external ODD conditions may refer to external factors or environmental elements that impact the operation of the automated driving system. The internal ODD conditions may refer to the capabilities and limitations inherent to the autonomous vehicle or the ADS itself.

The external ODD conditions may include geographical limits defining the geographic area or region where the ADS is intended to operate, such as urban areas, highways, or specific cities. The external ODD conditions may include environmental factors including conditions like weather (rain, snow, fog, etc.), lighting conditions (daylight, night-time), and various terrains (mountainous, urban, rural) that affect the ADS's sensors and perception systems. The external ODD conditions may include road infrastructure comprising the types of roads, lanes, intersections, signage, and road markings the ADS is designed to navigate. The external ODD conditions may include traffic conditions comprising variations in traffic density, behaviour of other vehicles, pedestrians, and cyclists.

The internal ODD conditions may include ADS capability in the form of sensor capability parameters, such as e.g., the range, accuracy, and reliability of sensors such as cameras, LiDAR, radar, and other perception systems. The internal ODD conditions may include ADS capability in the form of processing and decision-making parameters comprising computing power and algorithms used for interpreting sensor data, making driving decisions, and controlling the vehicle. The internal ODD conditions may include ADS capability in the form of functional capability parameters, including its ability to handle complex traffic situations, navigate intersections, change lanes, park, and perform emergency manoeuvres.

As used herein, the term "driving task" refers to moving the vehicle from a first point (point A) to a second point (point B), different from the first point. For example, the driving task may include manoeuvring the vehicle from a first location (e.g., town A) to a second location (e.g., town B) along one or more road segments.

Accordingly, a "driving sub-task" (may also simply be referred to as "sub-task") as used herein, refers to a part of an entire "driving task". For example, if a driving task includes manoeuvring the vehicle from a first location to a second location, a first driving sub-task may include manoeuvring the vehicle from the first location to a first intermediate location between the first location (A) and the second location (B), a second driving sub-task may include manoeuvring the vehicle from the first intermediate location (A') to a second intermediate location (A") between the first intermediate location (A') and the second location (B), and so forth.

In some embodiments, the driving task is decomposed into driving sub-tasks based on geographical or environmental aspects of the one or more roads separating the first and the second location. For example, a driving sub-task may be defined based on a type of road, such that if a driving task (moving from location A to location B) includes traversing 5 different roads or segments of a road (with different characteristics), each driving sub-task may include manoeuvring the vehicle on a specific road or a specific segment of a road out of those 5 different roads or stretches of road. Furthermore, the action of entering or exiting a particular road or stretch of a road may in itself define a separate driving sub-task. Thus, in some embodiments the driving task is decomposed into a plurality driving sub-tasks so that each driving sub-task involves moving the vehicle along a specific part or segment of the entire driving task.

For example, assuming that the driving task comprises moving the vehicle along a first highway, exiting the first highway so to enter a second highway via a connecting road, and driving along that second highway, then the driving task may be decomposed into sub-tasks as follows. Firstly, driving along the first highway for a set distance may define one sub-task, exiting the road via a highway exit slip road may define another sub-task, traversing the vehicle along the connecting road until reaching an entry slip road for the second highway may define another sub-task, and preparing the entry on the second highway via the entry slip road may define another sub-task, and finally driving along the second highway for a set distance may define another sub-task.

The term "risk calculation" in the present context may be understood as a calculation of a risk exposure for an Automated Driving System (ADS) of a vehicle for executing a driving task. In other words, a risk calculation refers to an estimate of what risk exposure an ADS would have while executing a particular driving task (e.g., manoeuvring from point A to point B) in terms of probabilities of incidents/collisions and therefore exposure to danger or injuries for the vehicle's occupants and potentially also for other road users.

In more detail, the "risk calculation" refers to the systematic process of assessing the potential hazards and their associated likelihood and severity. This assessment is based on the capabilities of the ADS (including its sub-components), as well as the environmental context in which the driving task is performed. The objective is to quantify the risk to ensure the safety and reliability of the ADS.

The risk calculation may for example be performed by accessing a database, where the ADS capability information (e.g., software and hardware versions, sensor capability, actuator capability, etc.) and environmental parameters (e.g., road conditions, traffic situations, weather conditions, visibility and lighting, etc.) of the driving task are used to find a risk value. The database may for example be formed during design-time based on simulations and field-testing of ADS-equipped vehicles.

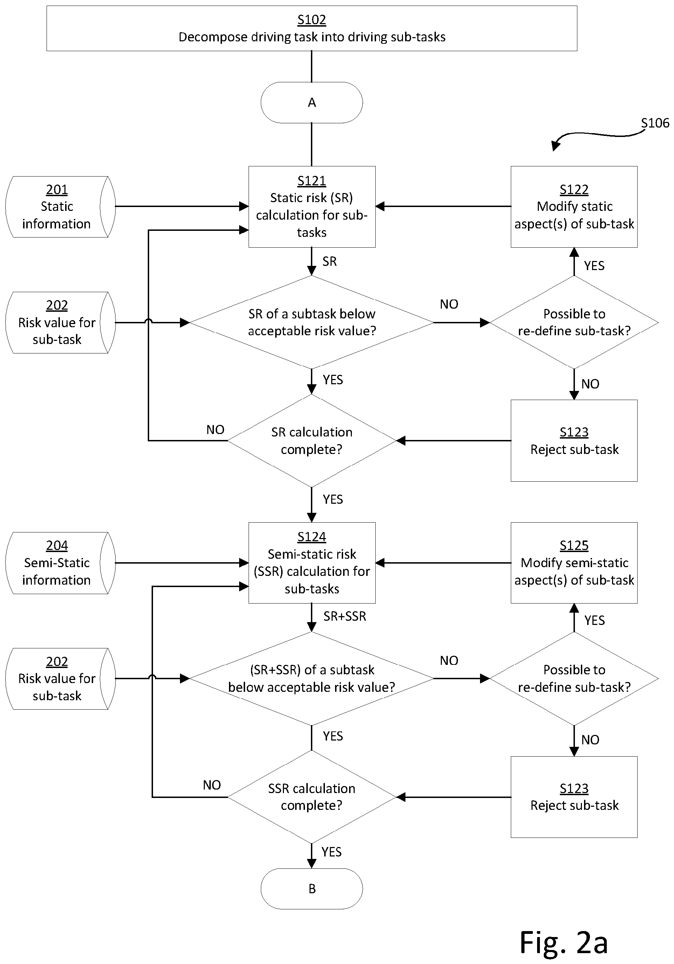

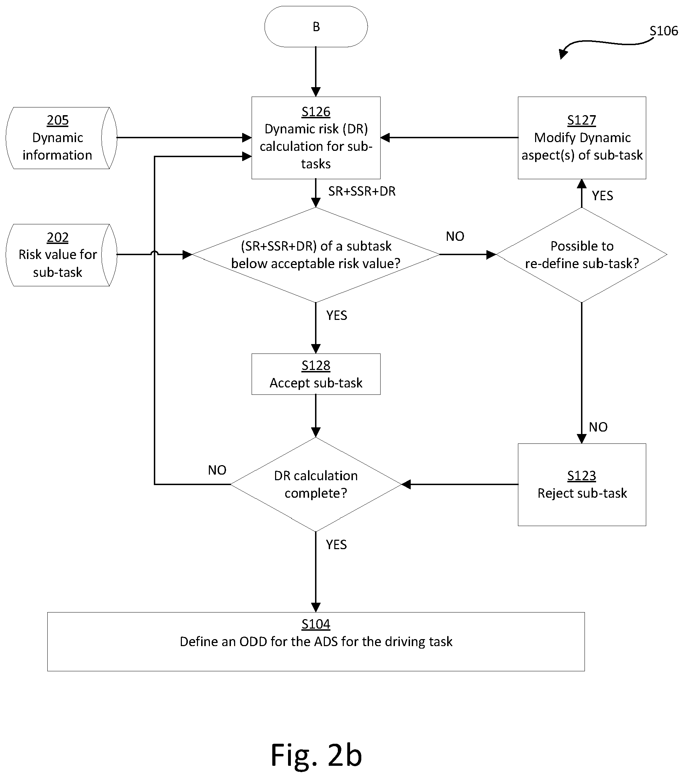

A "hierarchical multi-level risk calculation" may be understood as an advanced approach to risk assessment that involves structuring the risk analysis into multiple layers or levels, each representing different degrees of detail and aggregation. This method is particularly useful for complex systems like Automated Driving Systems (ADSs), where various subsystems and environmental factors interact in intricate ways. In particular, the levels may be defined and separated based on the rate-of-change of the environmental context surrounding each driving sub-task. For example, the hierarchical multi-level risk calculation may be separated into four layers or levels: A static risk calculation for environmental parameters changing yearly or slower (e.g., road information), a semi-static risk calculation for environmental parameters changing weekly or monthly (e.g., lane quality, road works, etc.), a dynamic risk calculation for environmental parameters changing daily (e.g., weather, temperature, lighting, traffic conditions, etc.), and a run-time risk-calculation for environmental parameters changing by the minute where the three previous risk calculations are repeated with additional data including real-time sensor information, V2V information from other vehicles, etc. A schematic example of a hierarchical multi-level risk calculation with three levels/layers is illustrated in Figs. 2a-2b and further described below.

An "acceptable risk value" in the context of automated driving systems refers to a predefined threshold of risk that is considered tolerable or permissible when assessing the safety of these systems. It is the level of risk that stakeholders (e.g., manufacturers, regulators, and the public) deem reasonable given the benefits of the technology, such as increased safety, efficiency, and convenience. The acceptable risk value may for example be defined as a number of expected incidents (e.g., collisions) per unit of time or as a probability of being above or below a pre-set acceptable number of expected incidents (e.g., collisions) per unit of time. The acceptable risk value may for example be given from a Positive Risk Balance (PRB) framework, where PRB is typically understood as the property that deployment of an ADS feature should improve road safety by reducing the aggregate amount of physical harm incurred to road users compared to conventional driving.

### Embodiments

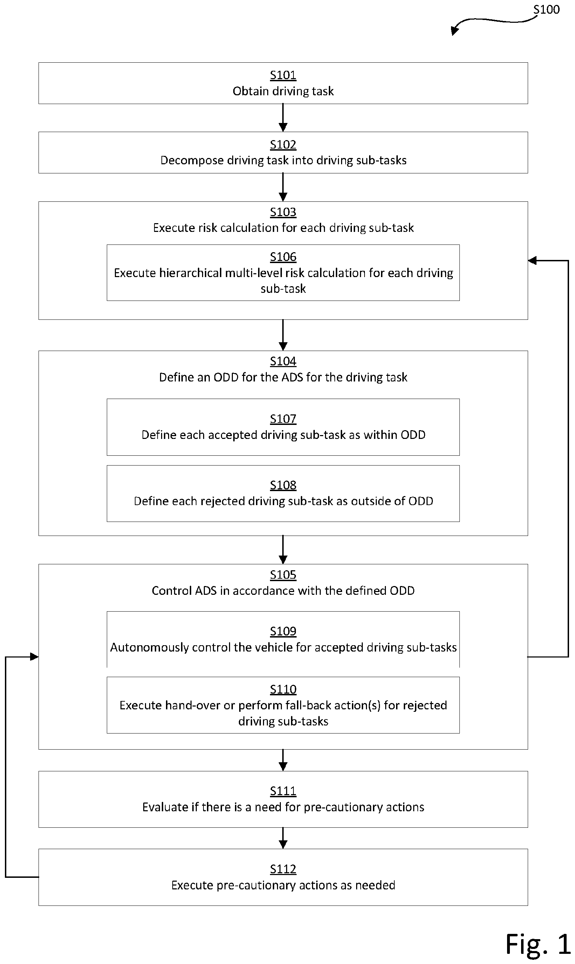

Fig. 1 is a schematic flowchart representation of a method S100 for dynamically adapting an Operational Design Domain (ODD) for an Automated Driving System (ADS) of a vehicle in accordance with some embodiments. The method S100 is preferably a computer-implemented method S100, performed by a processing system of the ADS-equipped vehicle. The processing system may for example comprise one or more processors and one or more memories coupled to the one or more processors, wherein the one or more memories store one or more programs that causes the processing system to perform the steps, services and functions of the method S100 disclosed herein when executed by the one or more processors.

The method S100 comprises obtaining S101 a driving task to be executed by the ADS. The driving task may for example comprise route information defining a travel route for the vehicle from a first location to a second location. The first location may for example be a current location of the vehicle, and the route information may for example be provided by a navigation system of the vehicle or a handheld device (e.g., smartphone) of the driver or other occupant of the vehicle. For example, the driver may input a desired end destination in his/her handheld device or in the navigation system of the vehicle. The handheld device or the navigation system then calculates a route to the end destination from a current position of the vehicle and outputs it to the ADS of the vehicle.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a driving task to be executed by the ADS of the vehicle may encompass determining or computing a driving task of the vehicle based on e.g. GNSS data together with map data. Thus, as used herein, "obtaining" may indicate that a parameter is received at a first entity/unit from a second entity/unit, or that the parameter is determined at the first entity/unit e.g. based on data received from another entity/unit.

The method S100 further comprises decomposing S102 the obtained S101 driving task into a plurality of driving sub-tasks. In other words, the obtained S101 driving task is split S102 into a plurality of smaller driving sub-tasks. For example, assuming that the obtained S101 driving task is to move the vehicle from point A to point B, the decomposing S102 of the driving task into a plurality of driving sub-tasks may comprise defining a plurality of driving sub-tasks based on geographical areas or locations so that a completion of each driving sub-tasks results in a completion of the obtained S101 driving task.

In some embodiments, the obtained S101 driving task comprises manoeuvring the vehicle from a first location to a second location, and the decomposing S102 of the obtained driving task into a plurality of driving sub-tasks comprises dividing a distance between the first location and the second location into a plurality of connected segments, and wherein each driving sub-task defines a manoeuvring of the vehicle from a start to an end of a specific segment of the plurality of connected segments.

Further, the method S100 comprises executing S103 a risk calculation for each driving sub-task to evaluate whether the ADS is capable of executing each driving sub-task in view of an acceptable risk value for each driving sub-task based on a capability of the ADS and information about an environmental context surrounding each driving sub-task. In other words, the risk exposure for the occupants of the vehicle and the other road users is assessed, for each driving sub-task, based on the capabilities of the ADS (e.g., sensor capabilities, actuator capabilities, functional capabilities) and the environmental context surrounding each driving sub-task (e.g., external ODD conditions) in view of an acceptable risk value. The purpose of the risk calculation is to estimate whether the risk exposure is, should the ADS autonomously execute a driving sub-task, at an acceptable level (i.e., within predefined acceptable limits).

In some embodiments, the output from the executed S103 risk calculation is a dataset comprising information about whether each driving sub-task of the plurality of driving sub-task is accepted or rejected for autonomous execution by the ADS. For example, a driving sub-task that is deemed to be within an acceptable risk value may be labelled as an accepted driving sub-task while a driving sub-task that is deemed to be outside of an acceptable risk value may be labelled as a rejected driving sub-task.

In some embodiments, the executing S103 the risk calculation for each driving sub-task comprises in response to a driving sub-task fulfilling its acceptable risk value during the risk calculation, accepting that driving sub-task for autonomous control of the vehicle using the ADS.

However, in response to a driving sub-task failing its acceptable risk value during the risk calculation, the execution S103 of the risk calculation may comprise checking if the driving sub-task that is failing its acceptable risk value can be modified. Then, in response to the driving sub-task that is failing its acceptable risk value being possible to modify, the execution S103 of the risk calculation may comprise modifying the driving sub-task that is failing its acceptable risk value, and executing a risk-calculation for the modified driving sub-task. Then, in response to the modified driving sub-task fulfilling its acceptable risk value, the modified driving sub-task may be accepted for autonomous control of the vehicle using the ADS. Should the modified driving sub-task fail its acceptable risk value, the modified driving sub-task may be rejected for autonomous control of the vehicle using the ADS.

Similarly, in response to the driving sub-task that is failing its acceptable risk value not being possible to modify, the driving sub-task may be rejected for autonomous control of the vehicle using the ADS. This process may accordingly be performed for each driving sub-task of the plurality of driving sub-tasks until all driving sub-tasks have been assessed in the risk calculation.

The terms "fulfilling its acceptable risk value" and "failing its acceptable risk value" may be understood as that the estimated risk for executing a particular driving sub-task is below an acceptable threshold and above an acceptable threshold, respectively, when the acceptable threshold is defined as a maximum allowable risk exposure.

Further, the method S100 comprises defining S104 an ODD for the ADS for the obtained driving task based on the executed risk calculation so to control an availability of the ADS for execution of each driving sub-task of the plurality of driving sub-tasks. In some embodiments, the step of defining S104 the ODD for the ADS may comprise defining S107 each accepted driving sub-task (including accepted modified driving sub-task) as within the ODD of the ADS and defining S108 each rejected driving sub-task (including rejected modified driving sub-tasks) as outside of the ODD of the ADS.

In other words, one may define S104 the ODD for the ADS based on any accepted driving sub-tasks, any accepted modified driving sub-tasks, any rejected driving sub-tasks, and any rejected modified driving sub-task so to allow the autonomous control of the vehicle using the ADS for executing any accepted driving sub-tasks or any accepted modified driving sub-tasks and to prohibit autonomous control the vehicle using the ADS for executing any rejected driving sub-tasks or rejected modified driving sub-task.

The term "to allow the autonomous control of the vehicle using the ADS" may be understood as that it is possible for a driver or a control system of the vehicle to activate the ADS for autonomous control upon reaching a particular driving sub-task. Similarly, the term "to prohibit autonomous control the vehicle using the ADS" may be understood as that the ADS is unavailable for activation upon reaching a particular driving sub-task and/or that the ADS is actively disengaged at a suitable time prior to or upon reaching a particular driving sub-task.

Further, the method S100 comprises controlling S105 the ADS of the vehicle in accordance with the defined ODD for execution of the obtained driving task. In some embodiments, the controlling S105 of the ADS comprises autonomously controlling S109 the vehicle using the ADS for executing any accepted driving sub-tasks and any accepted modified driving sub-tasks. The controlling S105 of the ADS may further comprise initiating S110 a handover of control of the vehicle to a driver of the vehicle prior to reaching any rejected driving sub-tasks or rejected modified driving sub-task, or autonomously performing S110 one or more fall-back actions prior to or upon reaching any rejected driving sub-tasks or rejected modified driving sub-task.

The method S100 further comprises continuously repeating the risk calculation for any remaining driving sub-tasks not yet executed. In other words, the method S100 comprises a processing loop where the risk calculation is continuously repeated as long as there are any remaining driving sub-tasks not yet executed. Naturally, the definition S104 of the ODD and the controlling S105 of the ADS is also continuously repeated, or more generally continuously performed, based on the repeated risk calculation as long as there are any remaining driving sub-tasks not yet executed. Stated differently, the steps S103, S104, and S105 (including any sub-steps S106-S110) are looped while the there are driving sub-tasks not yet executed by the ADS or by the driver of the vehicle.

Further, in accordance with some embodiments, the method S100 further comprises continuously evaluating Sill if there is need for pre-cautionary actions to be performed by the ADS while the ADS is autonomously controlling the vehicle for executing a driving tub-task. Then, in response to identifying a need for pre-cautionary actions to be performed by the ADS, the method S100 may comprise executing S112 one or more pre-cautionary actions using the ADS while the ADS is autonomously controlling the vehicle for executing a driving tub-task.

The evaluation 5111 of a need for pre-cautionary actions may comprise checking if any ADS component or function has a degraded operational capability in comparison to the capability of the ADS used for the risk calculation, and/or if any environmental parameter has changed in comparison to the corresponding environmental parameter of the environmental context used for the risk calculation.

The evaluation 5111 of a need for precautionary actions may be understood as a form of precautionary planning employed by the ADS. Here, the term "precautionary planning" may be understood as functions or systems of the ADS for anticipating and planning for potential risks or situations that may arise during operation. In more detail, precautionary planning in the context of Automated Driving Systems may involve a meticulous and systematic approach to identifying, mitigating, and preparing for potential risks and uncertainties associated with ADS-equipped vehicles' operation. Precautionary planning may for example involve, continuously assessing the driving environment, analysing data from sensors and other sources to predict potential hazards, such as pedestrians, cyclists, erratic drivers, road construction, or adverse weather conditions. It may further involve prioritization of safety in decision-making. Algorithms determine how the vehicle should respond in various scenarios to minimize risks, whether that means braking, changing lanes, or adjusting speed to avoid potential collisions. It may further involve designing redundancy into critical systems and implementing fail-safe mechanisms. This ensures that if a primary system malfunctions, there are backup systems in place to maintain control or bring the vehicle to a safe stop. Moreover, precautionary planning may involve adherence to regulations and standards, continuous monitoring and adaptation, ethical considerations, and so forth. In essence, "precautionary planning" for an ADS may be understood as a comprehensive approach to anticipate, analyse, and mitigate risks associated with autonomous driving, aiming to ensure the safety, reliability, and ethical operation of these vehicles on the road.

Further, in some embodiments, the execution S103 of a risk calculation may comprise executing S106 a hierarchical multi-level risk calculation in order to evaluate whether the ADS is capable of executing each driving sub-task in view of the acceptable risk value for each driving sub-task based on the current capability of the ADS and the information about the environmental context surrounding each driving sub-task. Here, each level in the hierarchical multi-level risk calculation is defined based on a change rate of environmental parameters of the environmental context surrounding each driving sub-task. By splitting the risk calculation into different levels based on a change rate of the environmental parameters of the environmental context surrounding each driving sub-task a better computational efficiency for the risk calculation may be achieved. For example, for some levels the environmental parameters change slowly (years, month, weeks) - then those parts of the risk calculation may be executed offline (e.g., by a server in communication with the vehicle) while the levels with more rapidly changing parameters may be executed online (i.e., onboard the vehicle).

Figs. 2a-2b show a schematic flowchart representation of a hierarchical multi-level risk calculation in accordance with some embodiments. Here, the hierarchical multi-level risk calculation comprises three levels, a static risk (SR) calculation for slowly changing environmental parameters, a semi-static risk (SSR) calculation for moderately changing environmental parameters, and a dynamic risk (DR) calculation for more rapidly changing environmental parameters. The static risk (SR) calculation accounts for static environmental parameters 201 such as type of road (e.g., highway, country road, presence of barriers, etc.), the semi-static risk (SSR) calculation accounts for semi-static environmental parameters 204 (e.g., lane marker quality, road work, etc.), and the dynamic risk (DR) calculation accounts for dynamic environmental parameters 205 (e.g., weather, temperature, lighting conditions, traffic conditions, presence of lead vehicle, etc.). The static information 201, semi-static information 204, and dynamic information 205 may example be obtained from map data, third party services, vehicle sensors, and so forth as readily understood by the skilled person in the art.

Accordingly, the hierarchical multi-level risk calculation may comprise obtaining static information 201 about the environmental context surrounding each driving sub-task, and evaluating S121 each driving sub-task in view of an acceptable risk value 202 for each driving sub-task based on the current capability of the ADS and the obtained static information 201. Each driving sub-task that fulfils its acceptable risk value in view of the static risk calculation S121 can be considered to be temporarily accepted.

Should a driving sub-task fail the evaluation S121, i.e., should a driving sub-task be deemed too risky in view of the acceptable risk value 202, a check is performed to see if the driving sub-task that is failing its acceptable risk value 202 can be modified S122 in the context of that specific level of the hierarchical multi-level risk calculation. For the static risk calculation level, one may for example check if one can take a different road instead for that particular driving sub-task. If the driving sub-task cannot be modified S122, the driving sub-task is rejected S123 and if it can be modified S122, the driving sub-task is modified S122 and a static risk calculation S121 is performed for the modified S122 driving sub-task.

Once the static risk calculation for all driving sub-tasks that define the entire obtained S101 driving task has been executed S121, the hierarchical multi-level risk calculation continues to the semi-static risk calculation S124 for each sub-task that passed the static risk evaluation S121 (i.e., for each driving sub-task that was temporarily accepted after the static risk evaluation S121).

Accordingly, for all driving sub-task fulfilling its acceptable risk value for the obtained static information 201, semi-static information 204 about the environmental context surrounding each driving sub-task is obtained, and each driving sub-task is evaluated S124 in view of the acceptable risk value 202 for each driving sub-task based on the current capability of the ADS and the obtained semi-static information 204. As before, should any driving sub-task fail the semi-static risk calculation S124, one tries to modify S125 the semi-static aspects of the sub-task (e.g., change lane or take another route). In the event that it is deemed not possible to modify S125 the driving sub-task, that particular driving sub-task is rejected S123. Also, should a driving sub-task fulfil its acceptable risk value in view of the semi-static risk calculation S124, that driving sub-task is temporarily accepted.

Once the semi-static risk calculation for all driving sub-tasks that passed the static risk evaluation S121 has been executed S124, the hierarchical multi-level risk calculation continues to the dynamic risk calculation S126 for each sub-task that passed the semi-static risk evaluation S124 (i.e., for each driving sub-task that was temporarily accepted after the semi-static risk evaluation S124).

Accordingly, for all driving sub-task fulfilling its acceptable risk value for the obtained semi-static information 204, dynamic information about the environmental context surrounding each driving sub-task is obtained, and each driving sub-task is evaluated S126 in view of the acceptable risk value 202 for each driving sub-task based on the current capability of the ADS and the obtained dynamic information 205. As before, should any driving sub-task fail the dynamic risk calculation S126, one tries to modify S127 the dynamic aspects of the sub-task (e.g., reduce speed). In the event that it is deemed not possible to modify S127 the driving sub-task, that particular driving sub-task is rejected S123. Also, should a driving sub-task fulfil its acceptable risk value in view of the dynamic risk calculation S128, that driving sub-task is accepted S128 for autonomous execution by the ADS.

Once the dynamic risk calculation S126 is completed for all relevant driving sub-tasks, one has a set of rejected S123 and accepted S128 sub-tasks that can be used to define S104 an ODD for the ADS for the obtained S101 driving task.

Executable instructions for performing these functions are, optionally, included in a non-transitory computer-readable storage medium or other computer program product configured for execution by one or more processors.

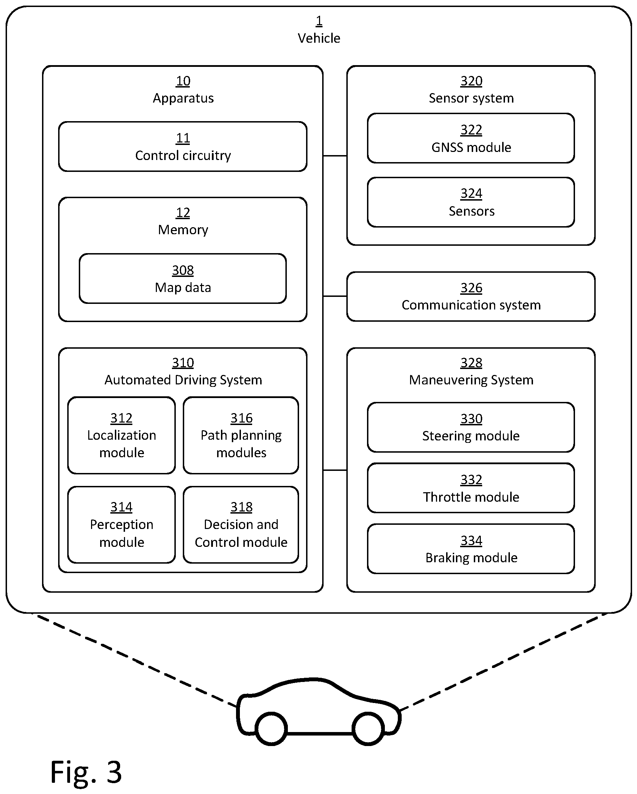

Fig. 3 is a schematic illustration of an ADS-equipped vehicle 1 comprising an apparatus 10 for dynamically adapting an Operational Design Domain (ODD) for the ADS 310 of the vehicle 1. As used herein, a "vehicle" is any form of motorized transport. For example, the vehicle 1 may be any road vehicle such as a car (as illustrated herein), a motorcycle, a (cargo) truck, a bus, etc.

The apparatus 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the apparatus 10 may form a part of the ADS 310, i.e. the apparatus 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 3. Moreover, the vehicle 1 may comprise further elements than those shown in Fig. 3. While the various elements are herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 3 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

More specifically, the at least one memory 12 and program code stored therein are configured to, with the at least one processor 11, cause the apparatus 10 to, during run-time obtain a driving task to be executed by the ADS 310 and decompose the obtained driving task into a plurality of driving sub-tasks. Moreover, the at least one memory and the program code are further configured to, with the processor, cause the apparatus to execute a risk calculation for each driving sub-task to evaluate whether the ADS 310 is capable of executing each driving sub-task in view of an acceptable risk value for each driving sub-task based on a capability of the ADS 310 and information about an environmental context surrounding each driving sub-task. Further, the at least one memory 12 and the program code are configured to, with the processor 11, cause the apparatus 10 to define an ODD for the ADS for the obtained driving task based on the executed risk calculation so to control an availability of the ADS 310 for execution of each driving sub-task of the plurality of driving sub-tasks, and control the ADS of the vehicle in accordance with the defined ODD for execution of the obtained driving task.

Moreover, the at least one memory 12 and the program code are configured to, with the processor 11, cause the apparatus 10 to continuously repeat the risk calculation for any remaining driving sub-tasks not yet executed. As before, the definition of the ODD based on the risk-calculation and the controlling of the ADS 310 may be repeated based on the repeated risk calculations.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

The processor(s) 11 (associated with the apparatus 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to some embodiments, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

Accordingly, it should be understood that parts of the described solution may be implemented either in the vehicle 1, in a system located external the vehicle 1, or in a combination of internal and external the vehicle, for instance, in a server in communication with the vehicle, a so-called cloud solution. For example, some or all parts of the risk calculation may be performed by the server as exemplified above. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various obtaining steps, decomposing steps, execution steps, defining steps, controlling steps, accepting steps, modifying steps, rejecting steps, and evaluation steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for dynamically adapting an Operational Design Domain (ODD) for an Automated Driving System (ADS) of a vehicle, the method comprising:
obtaining (S101) a driving task to be executed by the ADS;
decomposing (S102) the obtained driving task into a plurality of driving sub-tasks;
executing (S103) a risk calculation for each driving sub-task to evaluate whether the ADS is capable of executing each driving sub-task in view of an acceptable risk value for each driving sub-task based on a capability of the ADS and information about an environmental context surrounding each driving sub-task;
defining (S104) an ODD for the ADS for the obtained driving task based on the executed risk calculation so to control an availability of the ADS for execution of each driving sub-task of the plurality of driving sub-tasks;
controlling (S105) the ADS of the vehicle in accordance with the defined ODD for execution of the obtained driving task; and
continuously repeating the risk calculation for any remaining driving sub-tasks not yet executed.

2. The method (S100) according to claim 1, wherein executing (S103) the risk calculation for each driving sub-task comprises:
in response to a driving sub-task fulfilling its acceptable risk value during the risk calculation; accepting that driving sub-task for autonomous control of the vehicle using the ADS,
in response to a driving sub-task failing its acceptable risk value during the risk calculation; checking if the driving sub-task that is failing its acceptable risk value can be modified; in response to the driving sub-task that is failing its acceptable risk value being possible to modify:
modifying (S122, S125, S127) the driving sub-task that is failing its acceptable risk value, and
executing (S103) a risk-calculation for the modified driving sub-task;
in response to the modified driving sub-task fulfilling its acceptable risk value:
accepting the modified driving sub-task for autonomous control of the vehicle using the ADS;
in response to the modified driving sub-task failing its acceptable risk value:
rejecting (S123) the modified driving sub-task for autonomous control of the vehicle using the ADS;
in response to the driving sub-task that is failing its acceptable risk value not being possible to modify:
rejecting (S123) the driving sub-task for autonomous control of the vehicle using the ADS.

3. The method (S100) according to claim 2, wherein defining the ODD for the ADS comprises:
defining (S104) the ODD for the ADS based on any accepted (S128) driving sub-tasks, any accepted (S128) modified driving sub-tasks, any rejected (S123) driving sub-tasks, and any rejected (S123) modified driving sub-task so to allow the autonomous control of the vehicle using the ADS for executing any accepted driving sub-tasks or any accepted modified driving sub-tasks and to prohibit autonomous control the vehicle using the ADS for executing any rejected driving sub-tasks or rejected modified driving sub-task.

4. The method (S100) according to claim 2 or 3, wherein controlling (S105) the ADS of the vehicle comprises:
autonomously controlling (S109) the vehicle using the ADS for executing any accepted driving sub-tasks and any accepted modified driving sub-tasks;
initiating (S110) a handover of control of the vehicle to a driver of the vehicle prior to reaching any rejected driving sub-tasks or rejected modified driving sub-task, or autonomously performing (S110) one or more fall-back actions prior to or upon reaching any rejected driving sub-tasks or rejected modified driving sub-task.

5. The method (S100) according to any one of claims 1-4, further comprising:
continuously evaluating (5111) if there is need for pre-cautionary actions to be performed by the ADS while the ADS is autonomously controlling the vehicle for executing a driving tub-task;
in response to identifying a need for pre-cautionary actions to be performed by the ADS:
executing (S112) one or more pre-cautionary actions using the ADS while the ADS is autonomously controlling the vehicle for executing a driving tub-task.

6. The method (S100) according to claim 5, wherein evaluating (5111) if there is need for pre-cautionary actions comprises checking:
if any ADS component or function has a degraded operational capability in comparison to the capability of the ADS used for the risk calculation, and/or
if any environmental parameter has changed in comparison to the corresponding environmental parameter of the environmental context used for the risk calculation.

7. The method (S100) according to any one of claims 1-6, wherein executing (S103) a risk-calculation comprises:
executing (S106) a hierarchical multi-level risk calculation in order to evaluate whether the ADS is capable of executing each driving sub-task in view of the acceptable risk value for each driving sub-task based on the current capability of the ADS and the information about the environmental context surrounding each driving sub-task;
wherein each level in the hierarchical multi-level risk calculation is defined based on a change rate of environmental parameters (201, 204, 205) of the environmental context surrounding each driving sub-task.

8. The method (S100) according to claim 7, wherein the executing (S106) the hierarchical multi-level risk calculation comprises:
(i) obtaining static information (201) about the environmental context surrounding each driving sub-task, and
(ii) evaluating (S121) each driving sub-task in view of an acceptable risk value for each driving sub-task based on the current capability of the ADS and the obtained static information;
for all driving sub-task fulfilling its acceptable risk value for the obtained static information:
(iii) obtaining semi-static information (204) about the environmental context surrounding each driving sub-task, and
(iv) evaluating (S124) each driving sub-task in view of the acceptable risk value for each driving sub-task based on the current capability of the ADS and the obtained semi-static information;
for all driving sub-task fulfilling its acceptable risk value for the obtained semi-static information:
(v) obtaining dynamic information (205) about the environmental context surrounding each driving sub-task, and
(vi) evaluating (S126) each driving sub-task in view of the acceptable risk value for each driving sub-task based on the current capability of the ADS and the obtained dynamic information.

9. The method (S100) according to any one of claims 1-8, wherein the obtained (S101) driving task comprises manoeuvring the vehicle from a first location to a second location, and wherein decomposing (S102) the obtained driving task into a plurality of driving sub-tasks comprises dividing a distance between the first location and the second location into a plurality of connected segments, and wherein each driving sub-task defines a manoeuvring of the vehicle from a start to an end of a specific segment.

10. A computer program product comprising instructions which, when the program is executed by a computing device, causes the computing device to carry out the method (S100) according to any one of claims 1-9.

11. A computer-readable storage medium comprising instructions which, when executed by a computing device, causes the computing device to carry out the method (S100) according to any one of claims 1-9.

12. An apparatus (10) for dynamically adapting an Operational Design Domain, ODD, for an Automated Driving System, ADS, (310) of a vehicle (1), the apparatus (10) comprising at least one processor (11) and at least one memory (12) including program code, the at least one memory and the program code configured to, with the at least one processor, cause the apparatus (10) to, during run-time:
obtain a driving task to be executed by the ADS (310);
decompose the obtained driving task into a plurality of driving sub-tasks;
execute a risk calculation for each driving sub-task to evaluate whether the ADS is capable of executing each driving sub-task in view of an acceptable risk value for each driving sub-task based on a capability of the ADS and information about an environmental context surrounding each driving sub-task;
define an ODD for the ADS (310) for the obtained driving task based on the executed risk calculation so to control an availability of the ADS for execution of each driving sub-task of the plurality of driving sub-tasks;
control the ADS (310) of the vehicle in accordance with the defined ODD for execution of the obtained driving task; and
continuously repeat the risk calculation for any remaining driving sub-tasks not yet executed.

13. The apparatus (10) according to claim 12, wherein the at least one memory (12) and the program code are further configured to, with the processor (11), cause the apparatus (10) to execute the risk calculation for each driving sub-task by:
in response to a driving sub-task fulfilling its acceptable risk value during the risk calculation;
accepting that driving sub-task for autonomous control of the vehicle using the ADS (310),
in response to a driving sub-task failing its acceptable risk value during the risk calculation;
checking if the driving sub-task that is failing its acceptable risk value can be modified;
in response to the driving sub-task that is failing its acceptable risk value being possible to modify:
modifying the driving sub-task that is failing its acceptable risk value, and
executing a risk-calculation for the modified driving sub-task;
in response to the modified driving sub-task fulfilling its acceptable risk value:
accepting the modified driving sub-task for autonomous control of the vehicle using the ADS;
in response to the modified driving sub-task failing its acceptable risk value:
rejecting the modified driving sub-task for autonomous control of the vehicle using the ADS (310);
in response to the driving sub-task that is failing its acceptable risk value not being possible to modify:
rejecting the driving sub-task for autonomous control of the vehicle using the ADS (310).

14. The apparatus (10) according to claim 13, wherein the at least one memory (12) and the program code are further configured to, with the processor (11), cause the apparatus (10) to define the ODD for the ADS (310) by:
defining the ODD for the ADS (310) based on any accepted driving sub-tasks, any accepted modified driving sub-tasks, any rejected driving sub-tasks, and any rejected modified driving sub-task so to allow the autonomous control of the vehicle using the ADS for executing any accepted driving sub-tasks or any accepted modified driving sub-tasks and to prohibit autonomous control the vehicle using the ADS for executing any rejected driving sub-tasks or rejected modified driving sub-task.

15. A vehicle (1) comprising an apparatus (10) according to any one of claims 12-14.
